# EUROPEAN PATENT APPLICATION

(11) **EP 4 304 101 A1**
(43) Date of publication of application: **10.01.2024**
(21) Application number: 23183056.3
(22) Date of filing: 03.07.2023
(51) Int. Cl.: H04B 5/00

(54) **ANTENNA APPARATUS AND ELECTRONIC DEVICE**

(30) Priority: 05.07.2022 CN 202221743125 U
(71) Applicant: Nothing Technology Limited, London EC2V 6EE (GB)
(72) Inventor: CHEN, Kui, Shenzhen City (CN); LI, Jieshan, Shenzhen City (CN); SUN, Xi, Shenzhen City (CN); LIU, Yonglin, Shenzhen City (CN)
(74) Representative: EIP

(57) **Abstract**

The present disclosure discloses an antenna apparatus and an electronic device, relating to the technical field of antennas. The antenna apparatus comprises a circuit board, a first coil, and a light module. The first coil is provided on the circuit board. The light module is annularly provided on the circuit board along a circumferential direction of the first coil. For the antennal apparatus provided in the present disclosure, by providing the first coil on the circuit board, and meanwhile arranging the light module in a ring shape on the circuit board along the circumferential direction of the first coil, the light module and the first coil are respectively electrically connected to a motherboard of the electronic device, so that an operating state of the first coil is displayed by brightness or color of the light module

## Description

### TECHNICAL FIELD

The present disclosure relates to the technical field of antennas, and in particular, to an antenna apparatus and an electronic device.

### BACKGROUND

Currently, near field communication (NFC) and wireless power charging (WPC) dual-coil antenna technologies are applied to electronic devices increasingly widely and are also developing increasingly rapidly, and with the rapid advancement of sciences and technologies, NFC and WPC dual-coil antenna technologies also have become increasingly excellent. As a non-contact identification and interconnection technology, NFC can enable near field wireless communication between tools such as mobile terminals, mobile phones, tablet computers, and intelligent controls.

In the current mobile phone NFC and WPC solutions, the NFC and the WPC are usually independently designed: the NFC uses a metal middle frame as the antenna coil body; while a WPC coil is placed in a battery area. Meanwhile, an indicator lamp cooperating with the NFC or the WPC is also separately and independently designed. For example, the NFC and WPC functions are indicated by a flash lamp of a camera. Such separate independent design not only takes up space but also fails to visually meet customer requirements, thus degrading user experience.

### SUMMARY

In view of this, the present disclosure aims at overcoming shortcomings in the prior art. The present disclosure provides an antenna apparatus, so as to solve the technical problems in the prior art that the designs of WPC and NFC antennas and the indicator lamp occupy a large space and render a poor visual effect.

The present disclosure provides: an antenna apparatus, including: a circuit board; a first coil, provided on the circuit board; a second coil, provided on the circuit board, and located on the same side of the circuit board with the first coil; and a light module, annularly provided on the circuit board along a circumferential direction of the first coil.

In addition, the antenna apparatus according to the present disclosure further may have the following additional technical features: in some embodiments of the present disclosure, the antenna apparatus further includes a second coil, and the second coil is provided on the circuit board, wherein the second coil is located in a circumferential direction of an outermost ring of the first coil, and the light module is annularly arranged along a circumferential direction of the second coil; or the second coil is located in the circumferential direction of the outermost ring of the first coil, and the light module is annularly arranged along the circumferential direction of the first coil, and is located between the first coil and the second coil; or the second coil is located in the circumferential direction of the outermost ring of the first coil, and the first coil is located between the second coil and the light module; or the second coil is located in a circumferential direction of an innermost ring of the first coil, and the light module is annularly arranged along a circumferential direction of the second coil, and is located between the first coil and the second coil; or the second coil is located in the circumferential direction of the innermost ring of the first coil, the light module is annularly arranged in the circumferential direction of the first coil, and the first coil is located between the light module and the second coil.

In some embodiments of the present disclosure, the antenna apparatus further includes an adapter, the adapter is electrically connected to the first coil through a first connecting line, the adapter is electrically connected to the second coil through a second connecting line, and the adapter is electrically connected to the light module through a third connecting line.

In some embodiments of the present disclosure, a current detection sensor is provided between the second connecting line and the adapter, a tunable resistor is provided between the third connecting line and the adapter, and the current detection sensor is electrically connected to the tunable resistor.

In some embodiments of the present disclosure, the first coil is a WPC coil, and the second coil is an NFC coil; or the first coil is an NFC coil, and the second coil is a WPC coil.

In some embodiments of the present disclosure, the first coil is a WPC coil or an NFC coil.

In some embodiments of the present disclosure, the light module is an LED lamp strip, and the LED lamp strip forms a closed lamp ring along the circumferential direction of the second coil.

In some embodiments of the present disclosure, the light module includes a plurality of LED lamp strips, and the plurality of LED lamp strips are arranged at intervals along the circumferential direction of the second coil.

In some embodiments of the present disclosure, the antenna apparatus further includes a light guide plate, and the light guide plate is provided on a light emitting side of the light module.

In some embodiments of the present disclosure, the antenna apparatus further includes a light shading film, and the light shading film is arranged back-to-back with the light emitting side of the light module, and opposite to the light guide plate.

In some embodiments of the present disclosure, the circuit board is further provided thereon with a support plate, and the light guide plate and the light shading film are arranged on the same side of the support plate.

In some embodiments of the present disclosure, the circuit board is a flexible printed circuit FPC; and/or the adapter is a BTB (board-to-board) adapter.

In some embodiments of the present disclosure, there is a first gap between an outermost side of the first coil and an innermost side of the second coil, and there is a second gap between an outermost side of the second coil and an innermost side of the light module.

The present disclosure further provides an electronic device, including the antenna apparatus according to any one of the above embodiments.

In some embodiments of the present disclosure, a transparent rear cover is provided on a surface of the electronic device away from a screen, the transparent rear cover entirely covers the surface of the electronic device away from the screen, and the light module is visible through the transparent rear cover.

Compared with the prior art, the present disclosure has the following beneficial effects: the present disclosure provides an antenna apparatus, by providing the first coil on the circuit board, and meanwhile arranging the light module in a ring shape on the circuit board along the circumferential direction of the first coil, the light module and the first coil are respectively electrically connected to a motherboard of the electronic device, so that an operating state of the first coil is displayed by brightness or color of the light module. In this way, the light module and the first coil are both arranged on the circuit board, thereby saving other spaces of the electronic device, and meanwhile the display with the light module in a ring shape is visually more beautiful, and improves the user experience.

### BRIEF DESCRIPTION OF DRAWINGS

In order to more clearly illustrate technical solutions of embodiments of the present disclosure, drawings which need to be used in the embodiments will be introduced briefly below, and it should be understood that the drawings below merely show some embodiments of the present disclosure, therefore, they should not be considered as limitation to the scope, and a person ordinarily skilled in the art still could obtain other relevant drawings according to these drawings, without using any creative efforts.
FIG. 1 shows a structural schematic view of an antenna apparatus in an embodiment of the present disclosure, from one view of angle;
FIG. 2 shows an exploded structural schematic view of the antenna apparatus in an embodiment of the present disclosure;
FIG. 3 shows a structural schematic view of the antenna apparatus in another embodiment of the present disclosure, from one view of angle;
FIG. 4 shows a control schematic view of a light module of the antenna apparatus in an embodiment of the present disclosure;
FIG. 5 shows a schematic view of an electronic device in some embodiments of the present disclosure, from one view of angle; and
FIG. 6 shows a perspective structural schematic view of the electronic device in some embodiments of the present disclosure.

Reference signs of main elements:
100-antenna apparatus; 10-circuit board; 11-support plate; 20-first coil; 21-first connecting line; 30-second coil; 31-second connecting line; 40-light module; 41-third connecting line; 42-lamp strip; 43-light guide plate; 44-light shading film; 50-adapter; 60-first gap; 70-second gap; 80-current detection sensor; 90-tunable resistor; 200-electronic device; 201-transparent rear cover.

### DETAILED DESCRIPTION OF EMBODIMENTS

Embodiments of the present disclosure are described in detail below, and examples of the embodiments are shown in the drawings, in which like or similar signs represent like or similar elements or elements having like or similar functions throughout the drawings. The embodiments described below with reference to the drawings are exemplary, and merely used to explain the present disclosure, but cannot be construed as limitation to the present disclosure.

In the description of the present disclosure, it should be understood that orientation or positional relations indicated by terms "center", "longitudinal", "lateral", "length", "width", "thickness", "upper", "lower", "front", "back", "left", "right", "vertical", "horizontal", "top", "bottom", "inner", "outer", "clockwise", "anticlockwise", "axial", "radial", and "circumferential" and so on are based on orientation or positional relations as shown in the drawings, merely for facilitating the description of the present disclosure and simplifying the description, rather than indicating or implying that related devices or elements have to be in the specific orientation or configured and operated in a specific orientation, therefore, they should not be construed as limitation on the present disclosure.

In addition, the terms "first" and "second" are used for descriptive purposes only, and should not be understood as an indication or implication of importance in the relativity or an implicit indication of the number of the indicated technical features. Thus, the features defined with "first" and "second" may explicitly or implicitly include one or more of these features. In the description of the present disclosure, "multiple (a plurality of)" means two or more than two, unless otherwise defined explicitly and specifically.

In the present disclosure, unless otherwise specified and defined explicitly, terms such as "mount", "join", "connect", and "fix" should be construed in a broad sense, for example, a connection may be a fixed connection, a detachable connection, or an integral connection; it may be a mechanical connection, or also may be an electrical connection; it may be a direct connection, an indirect connection via an intermediate medium, or internal communication between two elements or interaction between two elements. For those ordinarily skilled in the art, specific meanings of the above-mentioned terms in the present disclosure can be understood according to specific circumstances.

In the present disclosure, unless otherwise expressly specified and defined, the expression that a first feature is "on" or "under" a second feature could be construed in such a way that the first feature and the second feature are in direct contact, or the first feature and the second feature are in indirect contact through an intermediary. Moreover, a first feature being "on", "over", and "above" a second feature may include a case where the first feature is directly above or not directly above the second feature, or merely indicates that the first feature is at a horizontal height higher than the second feature. The first feature being "under", "beneath", and "below" a second feature may include a case where the first feature is directly below or not directly below the second feature, or merely indicates that the first feature is at a horizontal height lower than the second feature.

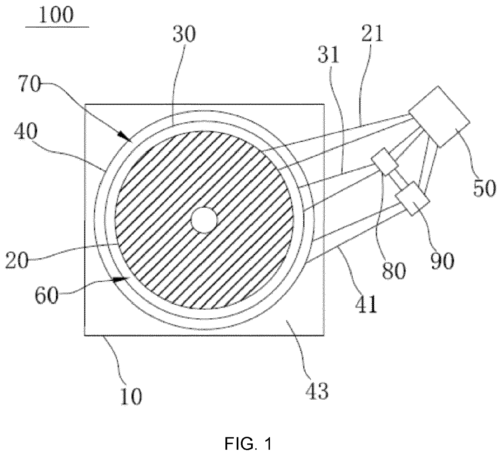

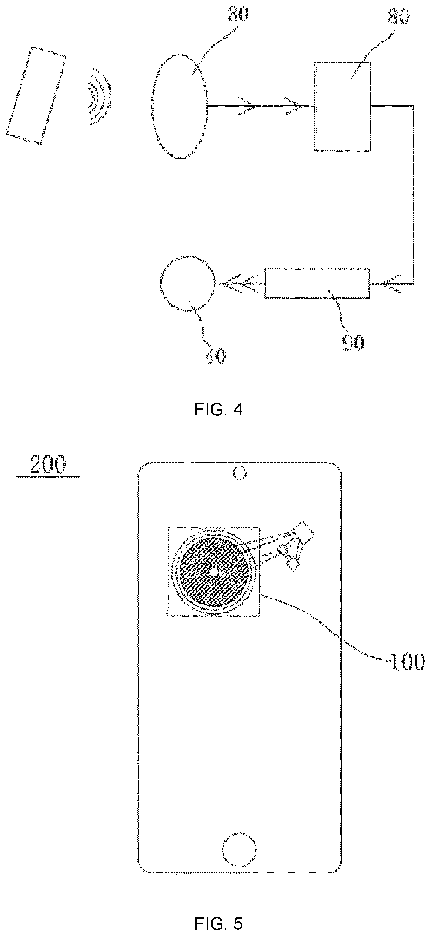

As shown in FIG. 1 and FIG. 5, an embodiment of the present disclosure provides an antenna apparatus 100, mainly used on an electronic device 200.

The antenna apparatus 100 includes a circuit board 10, a first coil 20, and a light module 40.

Specifically, the first coil 20 is provided on the circuit board 10, and the light module 40 is annularly provided on the circuit board 10 along a circumferential direction of the second coil 30.

For the antenna apparatus 100 provided in the embodiment of the present disclosure, by providing the first coil 20 on the circuit board 10, and providing the light module 40 in a ring shape on the circuit board 10 along a circumferential direction of the first coil 20, the light module 40 and the first coil 20 are electrically connected to a motherboard of the electronic device 200 respectively, so that the first coil 20 is displayed by means of brightness or color of the light module 40 in an operating state. In this way, both the light module 40 and the first coil 20 are arranged on the circuit board 10, thereby saving other spaces of the electronic device 200, avoiding the problem in the prior art that the indicator lamp and the NFC coil are separately designed and occupy spaces of the electronic device. In the prior art, an operating state of the NFC coil is indicated by a flash lamp of a camera or a screen, which is relatively monotonous visually, and thus affects user experience, but in the present embodiment, the display with the light module in a ring shape is visually more beautiful, and improves the user experience.

In an embodiment, the first coil is a WPC coil or an NFC coil.

Further, the antenna apparatus 100 further includes a second coil 30, and the second coil 30 is provided on the circuit board 10.

In an embodiment, the second coil 30 is located in a circumferential direction of an outermost ring of the first coil 20, and the light module 40 is annularly arranged along a circumferential direction of the second coil 30. In the present embodiment, by providing all of the first coil 20, the second coil 30, and the light module 40 on the circuit board 10, and connecting circuit parts of the three to the motherboard of the electronic device 200, the operating state of the first coil 20 or the second coil 30 is reflected by the display of brightness or color of the light module 40, and operating scenario and state of the first coil 20 or the second coil 30 are acquired, thus facilitating user use.

In other embodiments, the second coil 30 also may be located in a circumferential direction of an outermost ring of the first coil 20, and the light module 40 is annularly arranged along the circumferential direction of the first coil 20, and is located between the first coil 20 and the second coil 30. It is also feasible that the second coil 30 is located in the circumferential direction of the outermost ring of the first coil 20, and certainly, it is also feasible that the second coil 30 is located in the circumferential direction of the outermost ring of the first coil 20, and the first coil 20 is located between the second coil 30 and the light module 40.

It should be understood that, in some other embodiments, the second coil 30 is located in a circumferential direction of an innermost ring of the first coil 20, and the light module 40 is annularly arranged along the circumferential direction of the second coil 30, and is located between the first coil 20 and the second coil 30. Alternatively, the second coil 30 is located in the circumferential direction of the innermost ring of the first coil 20, the light module 40 is annularly arranged in the circumferential direction of the first coil 20, and the first coil 20 is located between the light module 40 and the second coil 30.

It should be noted that, for positional layout of the first coil 20, the second coil 30, and the light module 40, different positional combinations can be realized according to design requirements.

In some embodiments of the present disclosure, the antenna apparatus 100 further includes an adapter 50.

Specifically, the adapter 50 is electrically connected to the first coil 20 through a first connecting line 21, the adapter 50 is electrically connected to the second coil 30 through a second connecting line 31, the adapter 50 is electrically connected to the light module 40 through a third connecting line 41, and the adapter 50 can be electrically connected to the motherboard of the electronic device 200. In the above, the motherboard of the electronic device 200 is a control chip or a control circuit board.

In the prior art, NFC and WPC antenna modules are separated into two independent entities, and need to be separately connected to a motherboard chip, thus increasing assembly difficulty and cost. In the present embodiment, all of the first coil 20, the second coil 30, and the light module 40 are provided on the circuit board 10, and then the circuit parts of the three are electrically connected to the adapter 50 through the first connecting line 21, the second connecting line 31, and the third connecting line 41. For example, the circuit parts of the first coil 20, the second coil 30, and the light module 40 are welded onto the adapter 50 by the hot bar welding technique, and can be electrically connected to the motherboard of the electronic device 200 through the adapter 50, such that the number of connectors for separately connecting the first coil 20, the second coil 30, the light module 40 and so on to the motherboard is reduced, further the assembling procedures are reduced, and the assembling efficiency of the antenna apparatus 100 and the motherboard is improved, thus reducing the production cost of the electronic device 200.

Meanwhile, the configuration of the light module 40 also increases user's different experience, so that the operating state of the first coil 20 or the second coil 30 is reflected by the display of brightness or color of the light module 40, and the operating scenario and state of the first coil 20 or the second coil 30 are acquired.

In addition, the circuit parts of the first coil 20, the second coil 30, and the light module 40 are electrically connected to the adapter 50 through the first connecting line 21, the second connecting line 31, and the third connecting line 41, so that they are electrically connected to the motherboard of the electronic device 200 through the adapter 50, thus not only reducing the number of connectors for separately connecting the first coil 20, the second coil 30, the light module 40 and so on to the motherboard, but also increasing an available space of the motherboard, thereby increasing arrangement of other functional modules on the motherboard, improving the flexibility and feasibility, and ultimately improving the feasibility and plasticity of the innovation.

It should be noted that, in the present embodiment, a WPC (wireless power charging) coil is selected as the first coil 20, and an NFC (near field communication) coil is selected as the second coil 30. An operating frequency of the NFC coil is 13.56 MHz. An operating frequency of the WPC coil is 148 kHz.

It should be understood that, in other embodiments, the first coil 20 is an NFC coil, and the second coil 30 is a WPC coil. Certainly, the first coil 20 and the second coil 30 may also be coils of other functions.

Further, the first coil 20 and the second coil 30 are respectively made of a copper material into a module with an NFC function and a wireless charging function.

As shown in FIG. 1, FIG. 3, and FIG. 4, in some embodiments of the present disclosure, a current detection sensor 80 is provided between the second connecting line 31 and the adapter 50, a tunable resistor 90 is provided between the third connecting line 41 and the adapter 50, and the current detection sensor 80 is electrically connected to the tunable resistor 90.

In the present embodiment, by mounting the current detection sensor 80, for example, by using a Hall current sensor, between the second connecting line 31 and the adapter 50, magnetic field change of the NFC coil is detected by the current detection sensor 80, so as to control the brightness or color of the light module 40.

Specifically, on and off of the light module 40 is controlled by controlling the magnetic field of the NFC, that is, when the NFC is brought close to a device for validation, such as access control or subway gate, as a distance of the NFC to the device for validation changes, an induction magnetic field of the NFC coil varies accordingly, and the closer the NFC is to the device for validation, the stronger the induction magnetic field is, and the varying magnetic field will be converted into a form of current on a circuit.

Therefore, when these currents pass through the current detection sensor 80 on the NFC coil circuit, the current detection sensor 80 will output different signals to the tunable resistor 90 on the circuit of the light module 40 according to magnitude of the currents, the tunable resistor 90 controls magnitude of a resistance thereof according to the signal provided by the current detection sensor 80, so as to achieve the effect of regulating and controlling lamp brightness of the light module 40, thus, different user experiences are realized.

It should be noted that, in the above embodiments, the light module 40 also may control different colors of an LED (light emitting diode) lamp by setting different resistance values.

In addition, the light module 40 also can be set with different lighting states and colors under different field tests on APP through software design of the motherboard chip.

As shown in FIG. 1, in an embodiment of the present disclosure, optionally, the light module 40 includes several light emitting chips, and the several light emitting chips form a closed lamp ring along the circumferential direction of the first coil 20, wherein the several light emitting chips at least include one of LED, MiniLED, and MicroLED. In this way, the brightness is displayed by a lamp ring formed by the several light emitting chips.

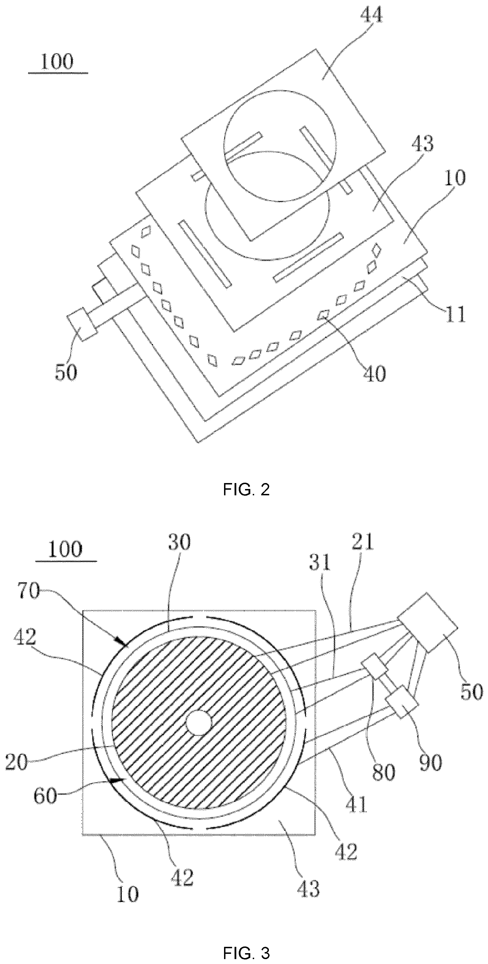

As shown in FIG. 3, in another embodiment of the present disclosure, optionally, the light module 40 includes several light emitting chips, and the several light emitting chips are arranged at intervals along the circumferential direction of the first coil, to form a nonclosed annular shape, wherein the several light emitting chips at least include one of LED, MiniLED, and MicroLED. In the present embodiment, several light emitting chips are selected to form a lamp strip 42, and four such lamp strips 42 are used to form a nonclosed annular shape, thereby achieving more lighting design effects in different scenarios.

For example, when using at a building access control, two of the four light strips 42 show a red color and the other two show a blue color, or display brightness of the four light strips 42 is different, but when using at a subway turnstile, one of the four light strips 42 shows a green color and the other three show a blue color. Certainly, different combinations may also be used, which is specifically designed mainly according to actual needs.

It should be understood that in other embodiments, two, three, five, or more light strips 42 may also be used, and it is not limited thereto.

It should be noted that, in the above embodiments where the light module 40 includes several light emitting chips, the MiniLED or MicroLED with a relatively small volume is preferably used, in this way, the light module 40 is made thinner, avoiding affecting the thickness of the electronic device 200.

As shown in FIG. 1 and FIG. 2, in some embodiments of the present disclosure, the antenna apparatus 100 further includes a light guide plate 43, and the light guide plate 43 is provided on a light emitting side of the light module 40.

In the present embodiment, by providing the light guide plate 43, light of the light module 40 can be guided out and controlled within a pre-set area and range, facilitating display and observation, and thus improving user's use experience.

As shown in FIG. 1 and FIG. 2, in some embodiments of the present disclosure, optionally, the antenna apparatus 100 further includes a light shading film 44, and the light shading film 44 is arranged back-to-back with the light emitting side of the light module 40, and arranged oppositely to the light guide plate 43. In this way, residual light at a backlight side of the light module 40 will not be transmitted out.

As shown in FIG. 2, in any one of the above embodiments of the present disclosure, optionally, the circuit board 10 is further provided thereon with a support plate 11, and the light guide plate 43 and the light shading film 44 are arranged on the same side of the support plate 11.

In this embodiment, the light guide plate 43 and the light shading film 44 are mounted on the support plate 11, in this way, they do not occupy the space of the circuit board 10.

It should be noted that, in the present embodiment, a flexible printed circuit (FPC) is selected as the circuit board 10, and the flexible printed circuit is mainly composed of a back adhesive base material, a glue, magnetic insulating material nanocrystals, or ferrite. A BTB (board-to-board) adapter 50 is selected as the adapter 50. The first connecting line 21, the second connecting line 31, and the third connecting line 41 are separately connected to a connection base of the BTB adapter 50, that is, they are welded onto the connection base by the hot bar welding technology, so that a connector of the BTB adapter 50 is connected to the motherboard. In this way, during assembly, the connection base of the BTB adapter 50 is directly connected to the connector, so as to facilitate the assembly. Certainly, the circuit board 10 and the adapter 50 are not limited thereto, and other forms of the circuit board 10 or the adapter 50 also may be selected in other embodiments.

As shown in FIG. 1 and FIG. 3, in some embodiments of the present disclosure, there is a first gap 60 between an outermost side of the first coil 20 and an innermost side of the second coil 30, and there is a second gap 70 between an outermost side of the second coil 30 and an innermost side of the light module 40.

In the present embodiment, by providing the first gap 60 and the second gap 70, current interference between the first coil 20 and the second coil 30 is avoided, and current interference between the second coil 30 and the light module 40 is also avoided.

Certainly, in other embodiments, it is also feasible that there is the first gap 60 between an innermost side of the first coil 20 and the outermost side of the second coil, and there is the second gap 70 between an outermost side of the first coil 20 and the innermost side of the light module 40. Specifically, different gaps can be correspondingly formed according to positional relationship between the first coil 20, the second coil 30, and the light modules 40.

It should be noted that the first gap 60 and the second gap 70 range from 1.5 mm to 2 mm. In the present embodiment, the first gap 60 and the second gap 70 are each selected to be 2 mm.

As shown in FIG. 5, Embodiment 2 of the present disclosure further provides an electronic device 200, including the antenna apparatus 100 described in any one of the above embodiments. The antenna apparatus 100 is assembled onto the electronic device 200 and electrically connected to the motherboard of the electronic device 200.

The electronic device 200 provided in Embodiment 2 of the present disclosure includes the antenna apparatus 100 in Embodiment 1, and therefore has all the beneficial effects of the antenna apparatus 100 in Embodiment 1, which is not elaborated herein.

In some embodiments of the present disclosure, optionally, the electronic device 200 may be a mobile phone, a wearable device (such as a smart watch), a tablet computer, a notebook computer, or the like.

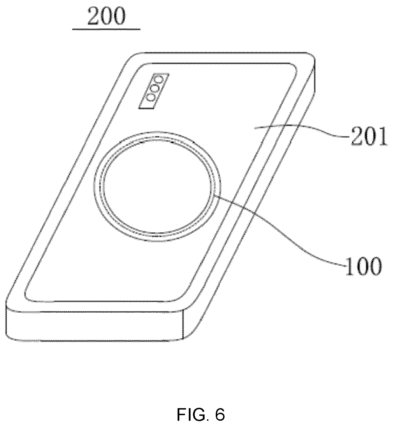

As shown in FIG. 6, in some embodiments of the present disclosure, optionally, a transparent rear cover 201 is provided on a surface of the electronic device 200 away from a screen, the transparent rear cover 201 entirely covers the surface of the electronic device away from the screen, and the light module 40 is visible through the transparent rear cover 201. In this way, by providing the transparent rear cover 201, it is convenient to display lamplight to the user, thereby improving the user's use experience.

In the description of the present specification, description with reference to terms such as "an embodiment", "some embodiments", "example", "specific example", or "some examples" means that a particular feature, structure, material, or characteristic described in connection with the embodiment or example is included in at least one embodiment or example of the present disclosure. In the present specification, exemplary expressions of the above terms are not necessarily directed to the same embodiment or example. Furthermore, particular features, structures, materials, or characteristics described may be combined in any suitable manner in one or more embodiments or examples. In addition, those skilled in the art could incorporate and combine different embodiments or examples and the features in the different embodiments or examples described in the description without conflict to each other.

The following clauses define further statements of invention.

An antenna apparatus, comprising: a circuit board; a first coil, provided on the circuit board; and a lamp module, annularly provided on the circuit board along a circumferential direction of the first coil.

2. The antenna apparatus according to clause 1, wherein the antenna apparatus further comprises a second coil, and the second coil is provided on the circuit board, wherein the second coil is located in a circumferential direction of an outermost ring of the first coil, and the light module is annularly arranged along a circumferential direction of the second coil; or the second coil is located in the circumferential direction of the outermost ring of the first coil, and the light module is annularly arranged along the circumferential direction of the first coil, and is located between the first coil and the second coil; or the second coil is located in the circumferential direction of the outermost ring of the first coil, and the first coil is located between the second coil and the light module; or the second coil is located in a circumferential direction of an innermost ring of the first coil, and the light module is annularly arranged along the circumferential direction of the second coil, and is located between the first coil and the second coil; or the second coil is located in the circumferential direction of the innermost ring of the first coil, the light module is annularly arranged in the circumferential direction of the first coil, and the first coil is located between the light module and the second coil.

3. The antenna apparatus according to clause 2, wherein the antenna apparatus further comprises an adapter, the adapter is electrically connected to the first coil through a first connecting line, the adapter is electrically connected to the second coil through a second connecting line, and the adapter is electrically connected to the light module through a third connecting line.

4. The antenna apparatus according to clause 3, wherein a current detection sensor is provided between the second connecting line and the adapter, a tunable resistor is provided between the third connecting line and the adapter, and the current detection sensor is electrically connected to the tunable resistor.

5. The antenna apparatus according to clause 2, wherein the first coil is a WPC coil, and the second coil is an NFC coil; or the first coil is an NFC coil, and the second coil is a WPC coil.

6. The antenna apparatus according to any one of clauses 2 to 5, wherein a first gap is provided between an outermost side of the first coil and an innermost side of the second coil, and a second gap is provided between an outermost side of the second coil and an innermost side of the light module.

7. The antenna apparatus according to any one of clauses 1 to 5, wherein the light module comprises several light emitting chips, and the several light emitting chips form a closed lamp ring along the circumferential direction of the first coil, wherein the several light emitting chips at least comprise one of LED, MiniLED, and MicroLED.

8. The antenna apparatus according to any one of clauses 1 to 5, wherein the light module comprises several light emitting chips, and the several light emitting chips are arranged at intervals along the circumferential direction of the first coil, to form a nonclosed annular shape, wherein the several light emitting chips at least comprise one of LED, MiniLED, and MicroLED.

9. The antenna apparatus according to any one of clauses 1 to 5, wherein the antenna apparatus further comprises a light guide plate, and the light guide plate is provided on a light emitting side of the light module.

10. The antenna apparatus according to clause 9, wherein the antenna apparatus further comprises a light shading film, and the light shading film is arranged back-to-back with the light emitting side of the light module, and opposite to the light guide plate.

11. The antenna apparatus according to clause 10, wherein the circuit board is further provided thereon with a support plate, and the light guide plate and the light shading film are arranged on the same side of the support plate.

12. The antenna apparatus according to clause 3 or 4, wherein the circuit board is a flexible printed circuit; and/or the adapter is a BTB adapter.

13. The antenna apparatus according to clause 1, wherein the first coil is a WPC coil or an NFC coil.

14. An electronic device, comprising the antenna apparatus according to any one of clauses 1 to 13.

15. The electronic device according to clause 14, wherein a transparent rear cover is provided on a surface of the electronic device away from a screen, the transparent rear cover entirely covers the surface of the electronic device away from the screen, and the light module is visible through the transparent rear cover.

## Claims

1. An antenna apparatus, comprising:
a circuit board;
a first coil, provided on the circuit board; and
a light module, annularly provided on the circuit board along a circumferential direction of the first coil.

2. The antenna apparatus according to claim 1, wherein the antenna apparatus further comprises a second coil, and the second coil is provided on the circuit board, wherein:
the second coil is located in a circumferential direction of an outermost ring of the first coil, and the light module is annularly arranged along a circumferential direction of the second coil; or
the second coil is located in the circumferential direction of the outermost ring of the first coil, and the light module is annularly arranged along the circumferential direction of the first coil, and is located between the first coil and the second coil; or
the second coil is located in the circumferential direction of the outermost ring of the first coil, and the first coil is located between the second coil and the light module; or
the second coil is located in a circumferential direction of an innermost ring of the first coil, and the light module is annularly arranged along the circumferential direction of the second coil, and is located between the first coil and the second coil; or
the second coil is located in the circumferential direction of the innermost ring of the first coil, the light module is annularly arranged in the circumferential direction of the first coil, and the first coil is located between the light module and the second coil.

3. The antenna apparatus according to claim 2, wherein the antenna apparatus further comprises an adapter, the adapter is electrically connected to the first coil through a first connecting line, the adapter is electrically connected to the second coil through a second connecting line, and the adapter is electrically connected to the light module through a third connecting line.

4. The antenna apparatus according to claim 3, wherein a current detection sensor is provided between the second connecting line and the adapter, a tunable resistor is provided between the third connecting line and the adapter, and the current detection sensor is electrically connected to the tunable resistor.

5. The antenna apparatus according to any of claims 2 to 4, wherein the first coil is a WPC coil, and the second coil is an NFC coil; or the first coil is an NFC coil, and the second coil is a WPC coil.

6. The antenna apparatus according to any one of claims 2 to 5, wherein a first gap is provided between an outermost side of the first coil and an innermost side of the second coil, and a second gap is provided between an outermost side of the second coil and an innermost side of the light module.

7. The antenna apparatus according to any one of claims 1 to 6, wherein the light module comprises several light emitting chips, and the several light emitting chips form a closed lamp ring along the circumferential direction of the first coil, wherein the several light emitting chips at least comprise one of LED, MiniLED, and MicroLED.

8. The antenna apparatus according to any one of claims 1 to 6, wherein the light module comprises several light emitting chips, and the several light emitting chips are arranged at intervals along the circumferential direction of the first coil, to form a nonclosed annular shape, wherein the several light emitting chips at least comprise one of LED, MiniLED, and MicroLED.

9. The antenna apparatus according to any preceding claim, wherein the antenna apparatus further comprises a light guide plate, and the light guide plate is provided on a light emitting side of the light module.

10. The antenna apparatus according to claim 9, wherein the antenna apparatus further comprises a light shading film, and the light shading film is arranged back-to-back with the light emitting side of the light module, and opposite to the light guide plate.

11. The antenna apparatus according to claim 10, wherein the circuit board is further provided on a support plate, and the light guide plate and the light shading film are arranged on the same side of the support plate.

12. The antenna apparatus according to claim 3 or 4, wherein the circuit board is a flexible printed circuit; and/or the adapter is a BTB adapter.

13. The antenna apparatus according to any preceding claim, wherein the first coil is a WPC coil or an NFC coil.

14. An electronic device, comprising the antenna apparatus according to any one of claims 1 to 13.

15. The electronic device according to claim 14, wherein a transparent rear cover is provided on a surface of the electronic device away from a screen, the transparent rear cover entirely covers the surface of the electronic device away from the screen, and the light module is visible through the transparent rear cover.
